# EUROPEAN PATENT APPLICATION

(11) **EP 4 176 780 A1**
(43) Date of publication of application: **10.05.2023**
(21) Application number: 21833242.7
(22) Date of filing: 01.07.2021
(51) Int. Cl.: A47J 43/00, A47J 43/07, A47J 43/10

(54) **HAND BLENDER**

(30) Priority: 01.07.2020 ES 202030662
(71) Applicant: Cecotec Research and Development S.L., 46930 Valencia (ES)
(72) Inventor: ORTS ÁVILA, Jose, 46930 QUART DE POBLET (ES); ORTS ÁVILA, César, 46930 QUART DE POBLET (ES)
(74) Representative: Patentanwaltskanzlei Hinkelmann
(86) International application number: PCT/ES2021/070481
(87) International publication number: WO 2022/003226

(57) **Abstract**

Hand mixer comprising at least: a main body comprising at least one motor unit; a removable element or arm, comprising at least: a transmission system, a bell comprising in its interior at least one set of cutting elements, a connecting element between the output of the motor unit and the transmission system, and connecting means between the main body and the removable element; characterized in that it further comprises at least one sub-bell, configured in the interior of the bell, comprising a rotation turn.

## Description

### TECHNICAL FIELD

The present invention refers to an electrical appliance or kitchen appliance, more specifically to handheld electrical appliances used to grind food, and more specifically to the drive system for the blades used by these appliances to perform its function of grinding food.

### BACKGROUND OF THE INVENTION

Currently, handheld electrical appliances used in domestic applications to grind food, such as hand blenders, which comprise a frame, power supply means, grinding means, such as blades, drive means of the grinding media, and a bell enclosing the grinding media, are widely known.

Document GB2409652A belongs to the state of the art, in which a blender is described that comprises a first portion that includes a motor, and a second portion that includes a transmission chain, the first and second portions being separably connected, and the motor and drive chain operatively connected. To this end, the first and second portions comprise a first and a second connector, respectively, which can be rotatably engaged with each other. It will also comprise a hermetic seal on the second connector. Finally, it will comprise a third portion that comprises a processing tool that can be operatively connected to the motor, through the transmission chain.

Document GB2550997A also belongs to the state of the art, in which a hand blender with a food processor is described that comprises a housing for the processor, with a first rotary tool that is configured to rotate within the processing space around a shaft, which is, in turn, configured to rotate around the axial axis according to the axis of the mixer, so as to configure an eccentric rotation with respect to the axial axis of the apparatus.

Document JP2018029660A also belongs to the state of the art, in which a mixing unit is described, which is prevented from unintentional rotation. For this, it comprises a mixing unit at a first end of the main body, which includes a blade unit, capable of cutting the food to be cooked; drive means that generate a rotary movement, to achieve rotation of the blade unit; and a button arranged at the second end of the main body, to activate and deactivate the drive of the blade unit. The button comprises an upper plate on the outside and is configured to activate the actuation means when the central part of the upper plate is pressed, preventing accidental actuation when pressing in a part other than the central one.

Lastly, document EP1656867A1 also belongs to the state of the art, in which a hand blender for cutting or mixing food products is described, comprising a rotating central axis, with at least one blade or paddle, which is fixed to the central axis of referred rotation, and an upper support for adjustment or union to the power unit of the hand blender, characterized in that it forms a removable assembly, formed by a removable base fitted to the lower part of the central axis by means of a fixing that allows the free rotation of the central axis with respect to the base.

As can be seen, there are a number of systems related to hand blenders, which comprise a power unit intended to cause rotation on a set of blades intended to grind or mix food. However, none of them achieves an efficient and optimal grinding operation, with a homogenization of said operation, in the shortest possible time, and emphasizing to correctly preserve the product's characteristics.

### EXPLANATION OF THE INVENTION

The hand blender that the invention proposes is configured, therefore, as a remarkable novelty within its field of application, since according to its implementation and exhaustively, the aforementioned objectives are satisfactorily achieved, with the characterizing details that make it possible, and that distinguish them conveniently collected in the final claims that follow this description.

Specifically, the object of the present invention is to achieve a kitchen appliance that contains a combined system of cutting elements with an internal rotation of the bell that includes the cutting elements, designed to improve grinding and, in this way, solve the technical problems mentioned above. To achieve this, the present invention proposes a hand blender that comprises an internal bell, hereinafter sub-bell, that comprises an additional and joint rotation to the one that includes the cutting elements, so that internal flows and vortexes are generated that allow a better finishing of the grinding.

For this purpose, the hand blender object of the present invention comprises a main body or frame, and a removable part or arm.

The main body will be where the electronic components, buttons and power unit are housed. Inside all the structural and electronic elements necessary for the correct operation of the device are comprised, such as a motherboard, a selector and different connectors.

In addition, the main body will be configured according to an ergonomic shape, which will guarantee an easy and intuitive grip of the electrical appliance.

The power unit comprises at least one motor, preferably a reluctance one, and an element for mechanical fastening to the main body.

The upper part of the arm, with the connection element, is specially designed for the tongue-and-groove connection between the main body and the arm itself, thus transmitting the movement of the power unit to the transmission system, comprised inside the arm.

On the other hand, the arm is made up of a structure that comprises a flared part at one of its ends, the previously mentioned connection element, a transmission shaft, aligning elements, the mobile sub-bell and the cutting elements.

In the so-called bell, located at one of the ends of the arm, it comprises a morphology and holes specially designed to promote the circulation of fluids, and help improve the grinding of the mixtures generated in the blender.

The cutting elements, which will be at least two, will be separated in two different axes, as previously mentioned, which will be concentric and independent. And they will comprise the aligning elements and the axes, located in the arm, necessary for its proper functioning.

The cutting elements have the function of beating, liquefying or grinding the product located in a container. Being morphologically optimized for carrying out these functions, comprising cutting edges and corners that achieve optimal grinding.

In addition, the cutting elements are attached to their axes by means of a mechanical connection and have different inclinations to generate internal flows that favor the homogenization of the product to be beaten. In addition, they present an ideal morphology to achieve this objective, such as cutting edges.

The sub-bell is configured as an additional cutting element thanks to its geometry and its sharp edges, which also rotates together with the cutting elements.

Regarding its morphology, the sub-bell will also comprise holes, in addition to slits, which are the ones that will generate suction flows of the fluid to be grinded.

In this way, due to the friction generated between the bell, as a fixed element, and the sub-bell, as a moving element; and thanks to the combination of the holes in the bell, and the holes and slits in the sub-bell, it is possible to generate depressions that greatly favor the effects of grinding food.

In this way, through the double action of the rotating sub-bell, plus the blades, ideal conditions are generated that solve the problem that the present invention is focused on.

That is, according to the previous explanation, the power unit will cause a rotational movement, which will be transmitted to the arm through the tongue and groove joint comprised in one end of it, which will be, in turn, transmitted to the cutting elements and the sub-bell, thanks to the transmission system of the arm itself.

The hand blender and the set of elements described represent an innovation with structural and constituent features unknown to this date, reasons that, together with its practical utility, provide it with sufficient grounds to obtain the requested privilege of exclusivity.

### BRIEF DESCRIPTION OF THE DRAWINGS

To complement the description that is being made and in order to help a better understanding of the characteristics of the invention, a set of drawings is attached as an integral part of said description, where, with an illustrative and non-limiting nature, the following has been represented:

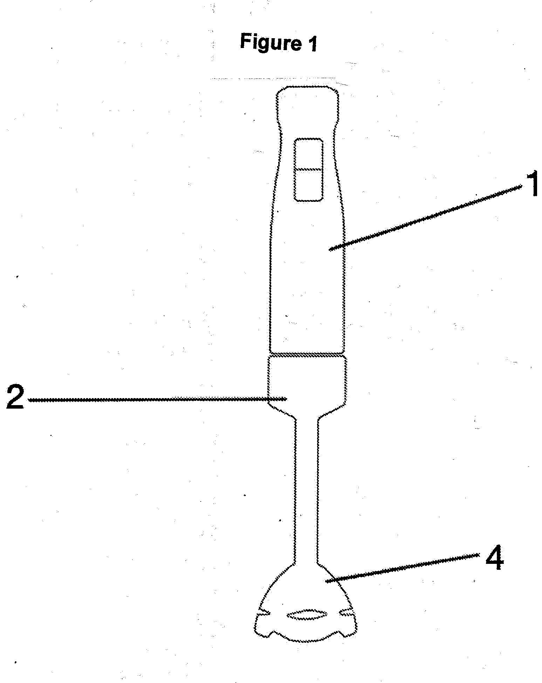

Figure 1.- General view of the present invention.

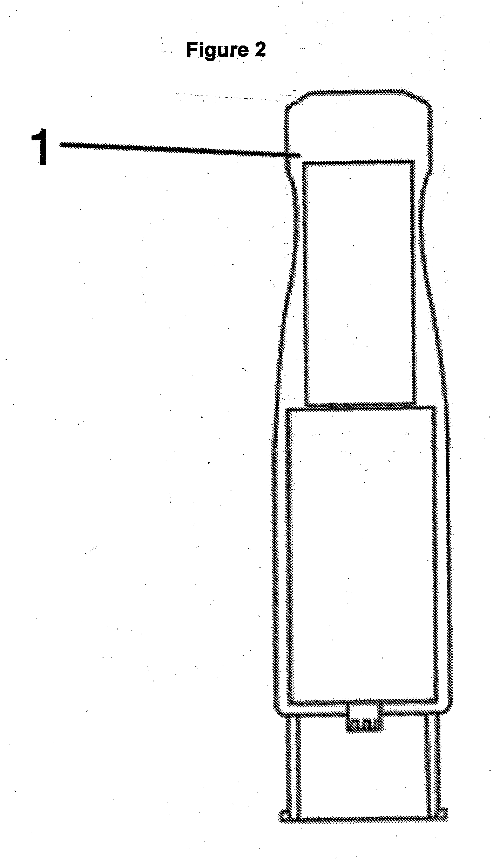

Figure 2.- General view of the main body

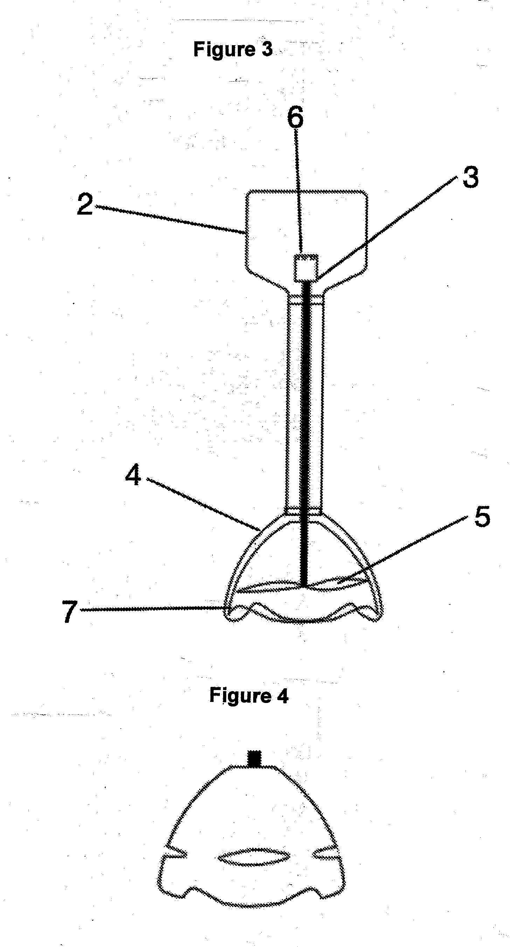

Figure 3.- Sectional view of the arm.
Figure 4.- Sectional view of the sub-bell.

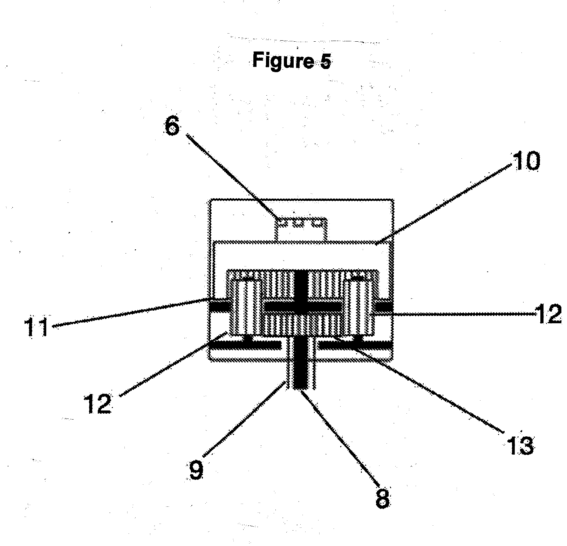

Figure 5.- Sectional view of the transmission system according to the last embodiment.

List of references and figures:
1. Main body
2. Removable element
3. Transmission system
4. Bell
5. First set of cutting elements
6. Connection element
7. Sub-bell
8. First axis
9. Second axis
10. Ring gear
11. Planetary gear system
12. Satellite gears
13. Sun gear

### PREFERRED EMBODIMENT OF THE INVENTION

In the following detailed description of the preferred embodiments, reference is made to the accompanying drawings which form a part of this specification, and in which are shown by way of illustration specific preferred embodiments in which the invention may be embodied. These embodiments are described in sufficient detail to enable those skilled in the art to carry out the invention, and it is understood that other embodiments may be used and logical structural, mechanical, electrical, and/or chemical changes may be made without departing from the scope of the invention. To avoid details not necessary to enable those skilled in the art to carry out the detailed description should therefore not be taken in a limiting sense.

Specifically, the present invention proposes a hand blender comprising at least: a main body 1 comprising at least one motor unit; a removable element 2, or arm, comprising at least: a transmission system 3, a bell 4 that comprises at least one set of cutting elements 5 inside, a connection element 6, between the outlet of the motor unit and transmission system 3, and connection means between the main body 1 and the removable element 2, which is characterized in that it additionally comprises at least one sub-bell 7, configured inside the bell 4, comprising a rotating spin.

According to this embodiment, there will be a hand blender in which not only the cutting elements 5 will rotate, but also an additional element, called sub-bell 7, inside the bell 4 itself, and in a concentric manner. Generating internal flows due to the friction of these two elements, which will favor the appearance of vortexes, improving the characteristics of the grinding.

In a first preferred embodiment, the sub-bell 7 will be mechanically and solidly attached to the set of cutting elements 5, where the motor unit will transmit a rotation movement to the transmission system 3, which will transmit it both to the cutting elements 5, and to the sub-bell 7.

In this way, a hand mixer will be achieved according to the first embodiment, which achieves a synchronous and joint movement of the cutting elements 5 and of the sub-bell 7.

According to another preferred embodiment, the transmission system 3 will comprise at least one first axis 8, solidly connected to the cutting elements 5; and a second axis 9, solidly connected to the sub-bell 7. Where the transmission system 3 transmits a rotation movement to the first axis 8, and a rotation movement to the second axis 9, which will be in the opposite direction to the direction of rotation of the first axis 8.

According to this embodiment, a hand blender is achieved according to the first embodiment, in which the rotation movement of the cutting elements 5 and the sub-bell 7 will have opposite directions, increasing the entropy generated inside the bell 4, and improving the grinding results by achieving higher internal flows.

Finally, in a preferred embodiment of the previous embodiment, the transmission system 3 will additionally comprise, and at least: a toothed ring gear 10, solidly attached to the first axis 8; a system of planetary gears 11, connected at its output to the second axis 9, comprising at least two satellite gears 12, and a sun gear 13; where: the rotation of the motor unit is transmitted to the ring gear 10, thanks to the connecting element 7; the rotation of the ring gear 10 is transmitted jointly to the first axis 8 and to the first set of cutting elements 5; the rotation of the ring gear 10 is transmitted to the satellite gears 12, according to a rotation movement in the same direction; the rotation of the satellite gears 12 is transmitted to the sun gear 13 according to a rotational movement in the opposite direction; the rotation of the sun gear 13 is transmitted to the second axis 9, and to the second set of cutting elements 5.

In this way, the motor will rotate the ring gear 10, thanks to the connection element 7, which will be transmitted directly to the first axis 8, rotating jointly the set of cutting elements 5.

In turn, the rotation of the ring gear 10 will rotate the satellite gears 12, with the same direction of rotation, and these will rotate the sun gear 13 according to an opposite direction of rotation.

The sun gear 13 will be solidly linked to the second axis 9, transmitting the rotation movement to it, which will transmit it, in the same way, to the sub-bell 7.

In this way, given a single direction of motor output rotation, it will be possible to transmit a rotation in the same direction to the first set of cutting elements 5, and a rotation in opposite direction of sub-bell 7.

In a preferred embodiment, the bell 4 will comprise through holes, and the sub-bell 4 comprises a combination of through holes and slits, which will favor the suction and crushing of the elements wanted to be grinded with the blender object of the present invention.

Having sufficiently described the nature of the present invention, as well as the way of putting it into practice, it is not regarded necessary to make its explanation more extensive so that any expert in the field understands its scope and the advantages derived from it, stating that, within its essentiality, it may be put into practice in other embodiments that differ in detail from the one indicated by way of example, and which will also be covered by the protection that is sought provided that its fundamental principle is not altered, changed, or modified.

## Claims

1. Hand blender comprising at least:
a main body (1) comprising at least one motor unit;
a removable element (2) or arm, comprising at least:
i. a transmission system (3),
ii. a bell (4) that comprises at least one set of cutting elements (5) inside,
iii. a connection element (6), between the output of the motor unit and the transmission system (3),
iv. and connection means between the main body (1) and the removable element (2);
**characterized in that** it additionally comprises at least one sub-bell (7), configured inside the bell (4), which comprises a rotational turn.

2. Hand blender according to the preceding claim, **characterized in that** the sub-bell (7) is mechanically and jointly connected to the set of cutting elements (5); where the motor unit transmits a rotational movement to the transmission system (3), which transmits it to the cutting elements (5) and to the sub-bell (7).

3. Hand blender according to the first claim, **characterized in that** the transmission system (3) comprises at least:
a first axis (8), connected to the cutting elements (5),
and a second axis (9), connected to the sub-bell (7),
where the transmission system (3) transmits a rotational movement to the first axis (8), and a rotation to the second axis (9), which will be in the opposite direction of the rotation of the first axis (8).

4. Hand blender according to the preceding claim, **characterized in that** the transmission system (3) comprises at least:
a ring gear (10), solidly connected to the first axis (8),
a planetary gear system (11), connected at its output to the second axis (9), which comprises at least:
i. two satellite gears (12)
ii. a sun gear (13),
where:
the rotation of the motor unit is transmitted to the ring gear (10), thanks to the connection element (7);
the rotation of the ring gear (10) is transmitted jointly to the first axis (8) and to the first set of cutting elements (5);
the rotation of the ring gear (10) is transmitted to the satellite gears (12), according to a rotation movement in the same direction;
the rotation of the satellite gears (12) is transmitted to the sun gear (13), according to a rotation movement in the opposite direction;
the rotation of the sun gear (13) is transmitted to the second axis (9) and to the second set of cutting elements (5).

5. Hand blender according to any of the preceding claims, **characterized in that** the bell (4) comprises through holes, and the sub-bell (7) comprises a combination of through holes and slits.
